# EUROPEAN PATENT APPLICATION

(11) **EP 3 399 364 A1**
(43) Date of publication of application: **07.11.2018**
(21) Application number: 15911939.5
(22) Date of filing: 31.12.2015
(51) Int. Cl.: G02B 27/01, H04R 5/033

(54) **HEAD-MOUNTED DISPLAY DEVICE AND HEAD-MOUNTED DISPLAY SYSTEM**

(71) Applicant: Shenzhen Royole Technologies Co., Ltd., Shenzhen, Guangdong 518172 (CN)
(72) Inventor: HU, Xiaodong, Shenzhen Guangdong 518052 (CN)
(74) Representative: Hamer, Christopher K.
(86) International application number: PCT/CN2015/100160
(87) International publication number: WO 2017/113313

(57) **Abstract**

The present disclosure provides a head-mounted display device including a display apparatus and a headphone apparatus, the headphone apparatus includes a headphone receiver, the display apparatus includes a first connection port, the headphone apparatus further includes a second and a third connection port. Therein, the display apparatus and the headphone apparatus are connected or disconnected via the first connection port and the second connection port, thus to make the display apparatus and the headphone apparatus to at a connection state or a disconnection state. The headphone apparatus controls to receive an audio signal via the third connection port and output the audio signal via the headphone receiver when detecting the first connection port of the display apparatus is disconnected from the second connection port of the headphone apparatus. In present disclosure, the headphone apparatus still works when the headphone apparatus is detached from the display apparatus, which facilitate to use.

## Description

### TECHNICAL FIELD

This disclosure relates to display devices, and more particularly relates to a head-mounted display device and a head-mounted display system with the same.

### BACKGROUND

Current head-mounted display device generally includes a display apparatus and a headphone apparatus, and in general, a video source signal is divided to a display signal and an audio signal at the display apparatus, then the display signal is output to the display apparatus to display, the audio signal is transmitted to the headphone apparatus to output to provide sound. In some application application scenarios, may be there is only need to receive the audio signal, then the display apparatus is redundant. However, because the audio signal of the current head-mounted display device is transmitted to headphone apparatus via the display apparatus, a problem that the headphone apparatus could not receive the audio signal would be caused if the display apparatus is detached from the headphone apparatus. Therefore, the current head-mounted display device should equip the display apparatus and the headphone apparatus simultaneously even though there is only need to listen music via the headphone apparatus, which brings inconvenient for the user.

### SUMMARY

Embodiments of the invention provide a head-mounted display device and a head-mounted display system, a headphone apparatus may be continue used when the headphone apparatus is detached from a display apparatus, which facilitate users to use.

A head-mounted display device provided in embodiments of the disclosure, including a display apparatus and a headphone apparatus, the headphone apparatus includes a headphone receiver, a second connection port and a third connection port, the display apparatus includes a first connection port. Therein, the display apparatus and the headphone apparatus are connected or disconnected via the first connection port and the second connection port, thus to make the display apparatus and the headphone apparatus to at a connection state or a disconnection state; when the headphone apparatus detects the first connection port of the display apparatus is disconnected from the second connection port of the headphone apparatus, the headphone apparatus controls to receive an audio signal via the third connection port and output the audio signal via the headphone receiver.

A head-mounted display system provided in embodiments of the disclosure, including a head-mounted display device and a control box configured to connect to the head-mounted display device. The head-mounted display device includes a display apparatus and a headphone apparatus, the headphone apparatus includes a headphone receiver, a second connection port and a third connection port, the display apparatus includes a first connection port. Therein, the display apparatus and the headphone apparatus are connected or disconnected via the first connection port and the second connection port, thus to make the display apparatus and the headphone apparatus to at a connection state or a disconnection state; when the headphone apparatus detects the first connection port of the display apparatus is disconnected from the second connection port of the headphone apparatus, the headphone apparatus controls to receive an audio signal from the control box via the third connection port and output the audio signal via the headphone receiver.

The head-mounted display device and the head-mounted display system of the present invention, which enables the headphone apparatus to be continue used when the headphone apparatus is detached from the display apparatus.

### BRIEF DESCRIPTION OF THE ACCOMPANYING DRAWINGS

To describe the technology solutions in the embodiments of the present invention more clearly, the following briefly introduces the accompanying drawings required for describing the embodiments. Apparently, the accompanying drawings in the following description show merely some embodiments of the present invention, Those of ordinary skill in the art may also derive other obvious variations based on these accompanying drawings without creative efforts.
FIG. 1 is a schematic diagram of a head-mounted display device at a first state, in accordance with an embodiment of the present invention;
FIG. 2 is a schematic view of a head-mounted display device at a second state, in accordance with an embodiment of the present invention;
FIG. 3 is a functional block diagram of a headphone apparatus in accordance with an embodiment of the present invention;
FIG. 4 is a structure diagram of a port selection module of the headphone apparatus in accordance with an embodiment of the present invention;
FIG. 5 is a schematic diagram of a head-mounted display system, in accordance with an embodiment of the present invention;
FIG. 6 is a functional block diagram of a control box of the head-mounted display system in accordance with an embodiment of the present invention;
FIG. 7 is a schematic diagram of a head-mounted display system, in accordance with another embodiment of the present invention;
FIG. 8 is a functional block diagram of a control box of the head-mounted display system in accordance with another embodiment of the present invention.

### DETAILED DESCRIPTION OF ILLUSTRATED EMBODIMENTS

The technical solution in the embodiments of the present invention will be described clearly and completely hereinafter with reference to the accompanying drawings in the embodiments of the present invention. Apparently, the described embodiments are merely some but not all embodiments of the present invention. All other embodiments obtained by a person of ordinary skill in the art based on the embodiments of the present invention without creative efforts shall fall within the protection scope of the present invention.

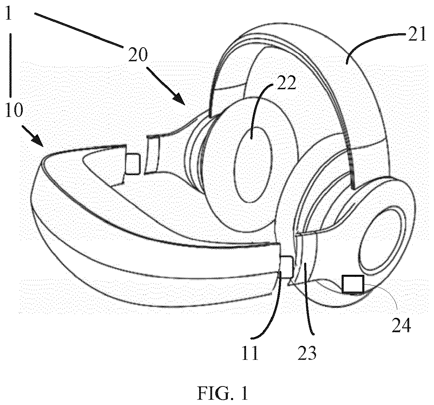

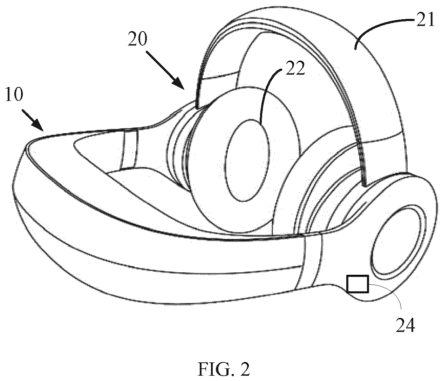

Referring to FIGs. 1 and 2 together, which shows a head-mounted display device 100 at different states of one embodiment of the present disclosure. As shown in FIG. 1, the head-mounted display device 100 includes display apparatus 10 and a headphone apparatus 20. The display apparatus 10 includes a first connection port 11, the headphone apparatus 20 includes a headphone annular belt 21, two headphone receiver 22 located at two ends of the headphone annular belt 21 and connected to each other via the headphone annular belt 21, a second connection port 23, and a third connection port 24. Therein, the first connection port 11 of the display apparatus 10 may be connected or disconnected from the second connection port 23 of the headphone apparatus 20, thus to make the display apparatus 10 and the headphone apparatus 20 to be represented as a connection state as shown in FIG. 2 or a disconnection state as shown in FIG. 1. When the headphone apparatus 20 detects the first connection port 11 of the display apparatus 10 is connected to the second connection port 23 of the headphone apparatus 20, the headphone apparatus 20 controls to receive an audio signal from the display apparatus 10 via the second connection port 23 and output the audio signal via the headphone receiver 22. When the headphone apparatus 20 detects the first connection port 11 of the display apparatus 10 is disconnected from the second connection port 23 of the headphone apparatus 20, the headphone apparatus 20 controls to receive an audio signal from the other audio and video source (not shown) via the third connection port 24 and output the audio signal via the headphone receiver 22.

Therefore, in present disclosure, when the display apparatus 10 and the headphone apparatus 20 of the head-mounted display device 1 are disconnected from each other, the headphone apparatus 20 may maintain to work. In this situation, when there is no need to use the display apparatus 10, the display apparatus 10 could be put off, thus to avoid the component is redundant and ensure the headphone apparatus 20 still usable.

Therein, the two headphone receiver 22 may establish data communication connection via the headphone annular belt 21, the audio signal may be output to one of the two headphone receiver 22 and then transmitted to another of the two headphone receiver 22 via the headphone annular belt 21. In other embodiments, the headphone annular belt 21 may be omitted, the headphone apparatus 20 may be an in-ear headphone.

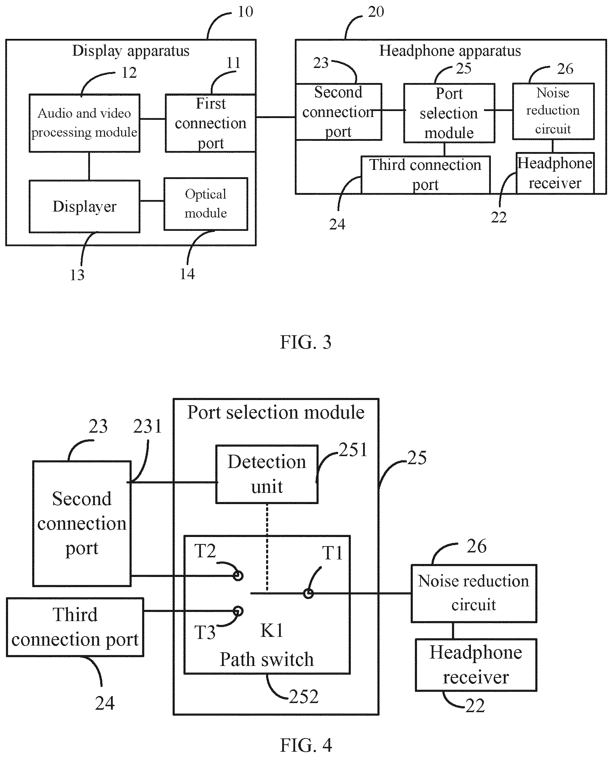

Referring to FIG. 3, which is a functional block diagram of the head-mounted device 1 of one embodiment of the present disclosure. Therein, the display apparatus 10 further includes an audio and video processing module 12 , in addition to the first connection port 11, the audio and video processing module 12 is configured to decode a video signal provided by an audio and video source to a display signal and an audio signal, and output the display signal to the display apparatus 10 to display and output the audio signal to the headphone apparatus 20 via the first connection port 11. Therein, the audio and video processing module 12 can be an audio and video codec chip.

The headphone apparatus 20 further includes a port selection module 25, in addition to the headphone receiver 22, the second connection port 23, and the third connection port 24. The port selection module 25 is connected between the second connection port 23, the third connection port 24, and the headphone receiver 22, and is configured to detect whether the second connection port 23 is connected to the first connection port 11 of the display apparatus 10 , and select one of the second connection port 23 and the third connection port 24 to connect to the headphone receiver 22 according to the detection result.

In detail, when the port selection module 25 detects the second connection port 23 is connected to the first connection port 11 of the display apparatus 10, the port selection module 25 establishes an electrical connection between the second connection port 23 and the headphone receiver 22, and disconnects an electrical connection between the third connection port 24 and the headphone receiver 22, at this time, the headphone apparatus 20 selects to receive the audio signal from the display apparatus 10 via the second connection port 23. When the port selection module 25 detects the second connection port 23 is disconnected from the first connection port 11 of the display apparatus 10, the port selection module 25 establishes the electrical connection between the third connection port 24 and the headphone receiver 22, and disconnects the electrical connection between the second connection port 23 and the headphone receiver 22, at this time, the headphone apparatus 20 selects to receive the audio signal via the third connection port 24.

As shown in FIG. 3, the display apparatus 10 further includes a displayer 13 and an optical module 14. The displayer 13 is connected to the audio and video processing module 12, and is configured to receive the video signal output by the audio and video processing module 12 and generate a corresponding display frame according to the video signal. The optical module 14 is configured to form an enlarged virtual image according to the display frame generated by the displayer 13 and project the enlarged virtual image to eyes of the user. The headphone apparatus 20 further includes a noise reduction circuit 26, the noise reduction circuit 26 is electrically connected the port selection module 25 and the headphone receiver 22, and is configured to execute a noise reduction process for the audio signal before the audio signal is output to the headphone receiver 22, thus to enhance audio quality.

Please referring to FIG. 4 together, which is an internal functional structure diagram of the port selection module 25. The port selection module 25 includes a detection unit 251 and a path switch 252. The second connection port 23 includes a connection detection pin 231. The path switch 252 is connected between the second connection port 23, the third connection port 24, and the headphone receiver 22, and is configured to establish the electrical connection between the second connection port 23 and the headphone receiver 22 or establish the electrical connection between the third connection port 24 and the headphone receiver 22. The detection unit 251 is connected to the connection detection pin 231, and is configured to detect a voltage level of the connection detection pin 231 to judge whether the second connection port 23 is connected to the first connection port 11 of the display apparatus 10. In detail, for example, when the second connection port 23 is connected to the first connection port 11 of the display apparatus 10, the connection detection pin 231 is at a high voltage level; when the second connection port 23 is disconnected from the first connection port 11 of the display apparatus 10, the connection detection pin 231 is at a low voltage level. Therefore, when the detection unit 251 detects the voltage level of the connection detection pin 231 is the high voltage level, the detection unit 251 judges the second connection port 23 is connected to the first connection port 11 of the display apparatus 10 now. When the detection unit 251 detects the voltage level of the connection detection pin 231 is the low voltage level, the detection unit 251 judges the second connection port 23 is disconnected from the first connection port 11 of the display apparatus 10 now, namely them are at the detached state. In one embodiment, when the detection unit 251 detects the voltage level of the connection detection pin 231 is changed, the detection unit 251 determines the connection state between the display apparatus 10 and the headphone apparatus 20 is changed now, and judges whether the display apparatus 10 and the headphone apparatus 20 are connected or disconnected from each other currently according to the voltage level has been changed.

Therefore, the detection unit 251 may be a single chip, a microprocessor, and etc.

The detection unit 251 is further configured to control the path switch 252 to establish the electrical connection between the second connection port 23 and the headphone receiver 22 when determining the second connection port 23 is connected to the first connection port 11 of the display apparatus 10, and control the path switch to establish the electrical connection between the third connection port 24 and the headphone receiver 22 when determining the second connection port 23 is disconnected from the first connection port 11 of the display apparatus 10.

The path switch 252 may be a single pole double throw switch K1, a static contact T1 of the single pole double throw switch K1 is electrically connected to the headphone receiver 22, two moveable contacts T2, T3 of the single pole double throw switch K1 are respectively electrically connected to the second connection port 23 and the third connection port 24. When the detection unit 251 judges the second connection port 23 is connected to the first connection port 11 of the display apparatus 10, the detection unit 251 then controls the static contact T1 of the single pole double throw switch K1 to connect to the moveable contact T2, thus to establish the electrical connection between the second connection port 23 and the headphone receiver 22. When the detection unit 251 judges the second connection port 23 is disconnected from the first connection port 11 of the display apparatus 10, the detection unit 251 then controls the static contact T1 of the single pole double throw switch K1 to connect to the moveable contact T3, thus to establish the electrical connection between the third connection port 24 and the headphone receiver 22.

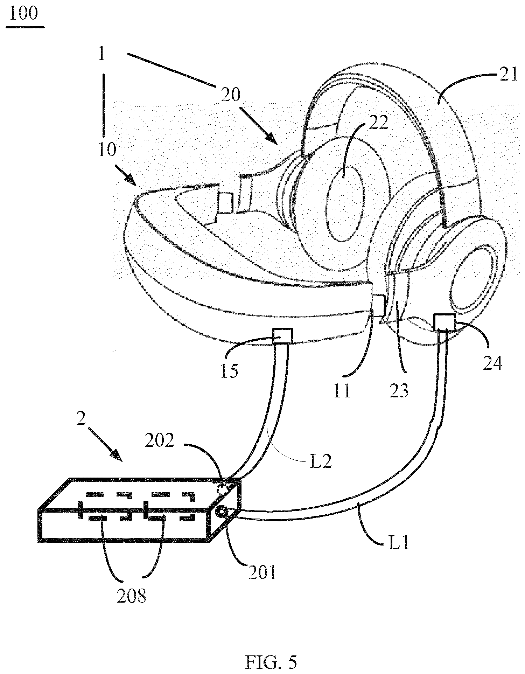

Please referring to FIG. 5, which is a schematic diagram of a head-mounted display system 100. The head-mounted display system 100 includes the head-mounted display device 1 as described in FIGs. 1-4 and a control box 2. The control box 2 includes an audio output port 201 and a video output port 202, the audio output port 201 is configured to connect to the headphone apparatus 20, the video output port 201 is configured to connect to the display apparatus 10. The control box 2 is configured to provide a video signal to the display apparatus 10 via the video output port 202 and provide an audio signal to the headphone apparatus 20 via the audio output port 201. Namely, the control box 2 provides the audio and video source described above for the display apparatus 10 and the headphone apparatus 20. As shown in FIG. 5, in one embodiment, the display apparatus 10 further includes a video port 15 configured to connect to the video output port 202 of the control box 2 and receive the video signal output by the control box 2. At this mode, the third connection port 24 may be an audio port, and only obtains the audio signal.

Therein, the audio output port 201 of the control box 2 may connects to the third connection port 24 of the headphone apparatus 20 via an audio line L1 whose two ends both with a plug. Namely, the two ends of the audio line L1 are respectively plugged into the audio output port 201 of the control box 2 and the third connection port 24 of the headphone apparatus 20 to establish the connection between the audio output port 201 of the control box 2 and the third connection port 24 of the headphone apparatus 20. The video output port 202 of the control box 2 may connects to the video port 15 of the display apparatus 10 via an video line L2 whose two ends both with a plug. Namely, the two ends of the video line L2 are respectively plugged into the video output port 202 of the control box 2 and the video port 15 of the display apparatus 10 to establish the connection between the video output port 202 of the control box 2 and the video port 15 of the display apparatus 10.

After the control box 2 outputs the audio and video signal to the display apparatus 10, the audio and video processing module 12 of the display apparatus 10 decodes the audio and video signal to the display signal and the audio signal, and respectively outputs to the displayer 13 and the first connection port 11. As described above, when the port selection module 25 detects the second connection port 23 is connected to the first connection port 11 of the display apparatus 10, the port selection module 25 establishes the electrical connection between the second connection port 23 and the headphone receiver 22, and disconnects the electrical connection between the third connection port 24 and the headphone receiver 22, at this time, the headphone apparatus 20 selects to receive the audio signal from the display apparatus 10 via the second connection port 23. When the port selection module 25 detects the second connection port 23 is disconnected from the first connection port 11 of the display apparatus 10, the port selection module 25 establishes the electrical connection between the third connection port 24 and the headphone receiver 22, and disconnects the electrical connection between the second connection port 23 and the headphone receiver 22, at this time, the headphone apparatus 20 selects to receive the audio signal from the control box 2 directly via the third connection port 24.

Therein, the audio output port 201 may be a standard audio port, the control box 2 may connect to the headphone apparatus 2 via the audio output port 201, when the display apparatus 1 is detached, the headphone apparatus 2 may be used as a pure headphone. Meanwhile, when the control box 2 is disconnected from both of the display apparatus 10 and the headphone apparatus 20, the control box 2 further can connect to a loudspeaker, a television and other devices with an audio port via the audio output port 201, to achieve outputting the audio. The audio line L1 may be an audio line with a left channel and a right channel accordingly.

The video output port 202 may be a universal serial bus (USB) port, a mobile high-definition link (MHL) port, a high-definition multimedia interface (HDMI) port, and etc. The control box 2 further can achieve communication connection with other devices, such as a television, a mobile phone, with a corresponding video port via the video output port 202, thus to provide source to other devices. The video line L2 may be a USB line, a MHL line, or a HMDI line accordingly.

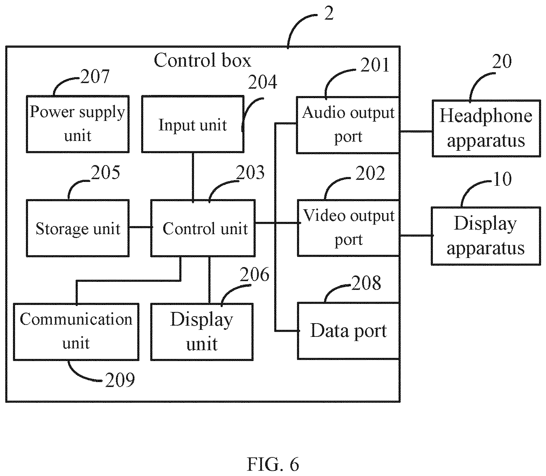

Please referring to FIG.6, which is a functional block diagram of the control box 2. The control box 2 further includes a control unit 203, an input unit 204, a storage unit 205, a display unit 206, and a power supply unit 207 in addition to the audio output port 201 and the video output port 202.

The storage unit 205 stores audio and video files, for example, the audio files including MP3 and the video files including MP4, AVI. The storage unit may be a flash memory card, a harddisk, a disk, and other storages. The control unit 203 may be a microcontroller, a central processing unit, a single chip, a digital signal processor, and etc. The power supply unit 207 supplies power for each component of the control box 2, and supplies power for the headphone apparatus 20, the display apparatus 10 via corresponding data lines connecting to the headphone apparatus 20 and the display apparatus 10.

The control unit 203 is configured to play one video file and generate a corresponding video signal in response to an operation of opening the video file, input via the input unit 204 by the user. As described above, the audio and video processing module 12 of the display apparatus 10 converts the video signal to the display signal and the audio signal, and respectively transmits them to the displayer 13 and the first connection port 11 of the display apparatus 10, thus to provide the display signal for the displayer 13 to display and provide the audio signal for the headphone apparatus 20 to output sound.

The control unit 203 is further configured to play one audio file and generate a corresponding audio signal in response to an operation of opening the audio file, input via the input unit 204 by the user, and transmit the audio signal to the headphone apparatus 20 via the audio output port 201.

In one embodiment, the control unit 203 further controls the control box 2 to enter a video play mode in response to a state that the display apparatus 10 is connected to the headphone apparatus 20, and controls the control box 2 to enter an audio play mode in response to a state that the display apparatus 10 and the headphone apparatus 20 are detached. In the video play mode, the control unit 203 controls the display unit 206 to display file sources including video format for the user to select, for example, the display unit 206 only displays the file with AVI format. Therein, a display form of the file source may include, but not limited to forms of a file list, icons, as long as the display form allows the user to recognize and select. The control unit 203 further plays one video file in response to the operation of opening the video file, input via the input unit 204 by the user, and controls the display unit 206 to display a control interface of the video file or contents of the video file. In the audio play mode, the control unit 203 controls the display unit 206 to only display file sources including audio format for the user to select, for example, the display unit 206 only displays the file with MP3 format. The control unit 206 further plays one audio file in response to the operation of opening the audio file, input via the input unit 204 by the user, and controls the display unit 206 to display a control interface of the audio file or lyrics of the video file.

As shown in FIG. 6 and FIG. 5, the control box 2 further includes at least one data port 208, the at least one data port 208 includes data ports configured to connect to the display apparatus 10, the headphone apparatus 20, and other devices, and are provided for the control box 2 to establish wired connections with the display apparatus 10, the headphone apparatus 20, and other devices. The data port 204 may include a USB port, a mini-USB port, a wired network port, and other types of ports. The control unit 203 further obtains the detection result of the port selection module 25 of the headphone apparatus 20, and controls the control box 2 to enter the video play mode or the audio play mode according to the detection result. In detail, the control unit 203 determines the display apparatus 10 is connected to the headphone apparatus 20 currently when the port selection module 25 detects the second connection port 23 is connected to the first connection port 11 of the display apparatus 10, and controls the control box 2 to enter the video play mode. The control unit 203 determines the display apparatus is disconnected from the headphone apparatus currently when the port selection module 25 detects the second connection port 23 is disconnected from the first connection port 11 of the display apparatus 10, and controls the control box 2 to enter the audio play mode.

In one embodiment, the control unit 203 controls the control box 2 to enter the audio play mode directly when the video output port 202 is not connected to the display apparatus 10.

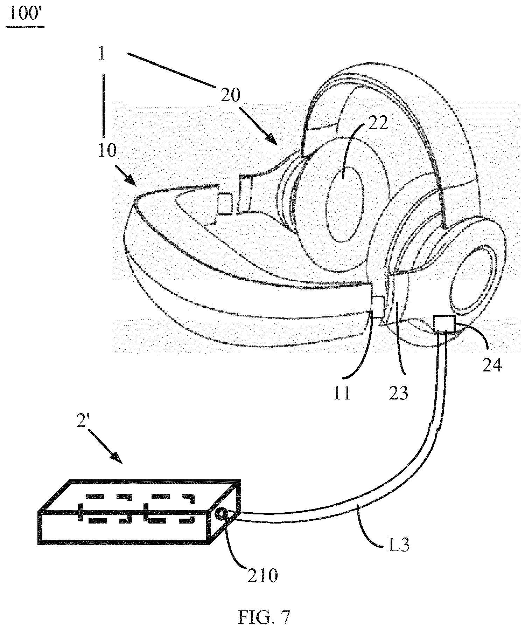

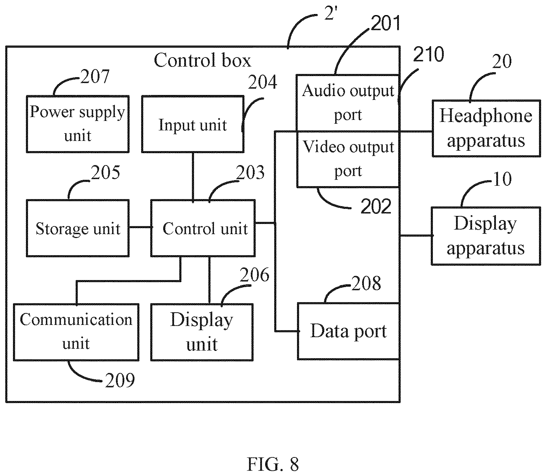

In other embodiments, as shown in FIG. 7 and FIG. 8, The audio output port 201 and the video output port 202 of the control box 2' may be integrated to an integrated port 210, the integrated port 210 of the control box 2' may connect to the third connection port 24 of the headphone apparatus 20 via a data line L3 capable of transmitting the audio signal and the audio signal, the data line L3 may be a pluggable data line whose two ends both with the plug. Because the head-mounted device 1 and other components are the same as described above, here will combine with the above embodiments to describe. The control box 2' may provide the video signal to the display apparatus 10 or provide the audio signal to the headphone apparatus 20 via the integrated port 210. The third connection port 24 of the headphone apparatus 20 is connected to the port selection module 25. When the port selection module 25 detects the second connection port 23 is connected to the first connection port 11 of the display apparatus 10, the port selection module 25 establishes an electrical connection between the second connection port 23 and the third connection port 24 and establishes the electrical connection between the second connection port 23 and the headphone receiver 22, at this time, the headphone apparatus 20 transmits the video signal obtained from the control box 2 via the third connection port 24 to the audio and video processing module 12 via the second connection port 23. Therefore, the audio and video processing module 12 of the display apparatus 10 decodes the video signal to the display signal and the audio signal, and outputs the display signal to the displayer 13 to display, the headphone apparatus 20 receives the audio signal from the display apparatus 10 via the second connection port 23, and plays the audio signal via the headphone receiver 22. When the port selection module 25 detects the second connection port 23 is disconnected from the first connection port 11 of the display apparatus 10, the port selection module 25 establishes the electrical connection between the third connection port 24 and the headphone receiver 22, and. The headphone apparatus 20 outputs the audio signal via the headphone receiver 22 and through the third connection port 24. In this embodiment, the head-mounted display system 100' constituted by the control box 2' and the head-mounted display device 1 only needs one data line L3 to connect. Meanwhile, the headphone apparatus 20 may still play the audio signal after the display apparatus 10 is detached from the headphone apparatus 20. At the same time, the control box 2' may still control the control box 2' itself to enter the video play mode or the audio play mode according to the detection result of the port selection module 25 of the headphone apparatus 20.

As shown in FIG. 6, the control box 2 further includes a communication unit 209, the communication unit 205 is configured to connect to other devices by wireless communication, the communication unit 205 may be a bluetooth module, WIFI module, wireless radio frequency module, high frequency communication module, and etc.

Therein, when the control box 2 connects to other devices via the data port 208 or the communication unit 209, the control unit 203 further controls the display unit 206 to display audio and video files in the other devices, thus to provide them to the user to select, the control unit 206 further controls to play the audio and video file of the other devices or network severs directly in response to user's selection.

In one embodiment, the control unit 203 further controls to store the audio and video files of the other devices in the storage unit 205 in response to a storing operation input from the input unit 204 via the user. Therein, the other devices may be mobile phones, personal computers, network servers, and etc.

Therein, the input unit 204 may include at least one selected from a tout panel, a touch screen, keys.

In one embodiment, the headphone apparatus 20 also sets the touch panel, the touch screen and other touch input devices as the input mechanism of play control.

The above is a preferred embodiment of the present invention, and it should be noted that those skilled in the art may make some improvements and modifications without departing from the principle of the present invention, and these improvements and modifications also are the protection scope of the present invention.

## Claims

1. A head-mounted display device, comprising a display apparatus and a headphone apparatus, the headphone apparatus comprising a headphone receiver, the display apparatus comprising a first connection port, the headphone apparatus further comprising a second connection port and a third connection port;
wherein, the display apparatus and the headphone apparatus are connected or disconnected via the first connection port and the second connection port, thus to make the display apparatus and the headphone apparatus to be at a connection state or a disconnection state; the headphone apparatus controls to receive an audio signal via the third connection port and output the audio signal via the headphone receiver when detecting the first connection port of the display apparatus is disconnected from the second connection port of the headphone apparatus.

2. The head-mounted display device according to claim 1, wherein when the headphone apparatus detects the first connection port of the display apparatus is connected to the second connection port of the headphone apparatus, the headphone apparatus controls to receive the audio signal from the display apparatus via the second connection port and output the audio signal via the headphone receiver.

3. The head-mounted display device according to claim 2, wherein the headphone apparatus further comprises a port selection module, the port selection module is connected between the second connection port, the third connection port, and the headphone receiver, and is configured to detect whether the second connection port is connected to the first connection port of the display apparatus to obtain a detection result, and select one of the second connection port and the third connection port to connect to the headphone receiver according to the detection result.

4. The head-mounted display device according to claim 3, wherein the port selection module comprises a detection unit and a path switch, the second connection port comprises a connection detection pin, the path switch is connected between the second connection port, the third connection port, and the headphone receiver; the detection unit is connected to the connection detection pin, and is configured to detect a voltage level of the connection detection pin to judge whether the second connection port is connected to the first connection port of the display apparatus; the detection unit is further configured to control the path switch to establish an electrical connection between the second connection port and the headphone receiver when determining the second connection port is connected to the first connection port of the display apparatus, and control the path switch to establish an electrical connection between the third connection port and the headphone receiver when determining the second connection port is disconnected from the first connection port of the display apparatus.

5. The head-mounted display device according to claims 2, wherein the display apparatus further comprises an audio and video processing module, the audio and video processing module is configured to decode a video signal provided by an audio and video source to a display signal and an audio signal, and output the display signal to the display apparatus to display and output the audio signal to the headphone apparatus via the first connection port.

6. The head-mounted display device according to claim 5, wherein the display apparatus further comprises a displayer and an optical module, the displayer connects to the audio and video processing module, and is configured to receive the display signal output by the audio and video processing module and generate a corresponding display frame according to the display signal, the optical module is configured to form an enlarged virtual image according to the display frame generated by the displayer and project the enlarged virtual image to eyes of a user.

7. The head-mounted display device according to claim 3, wherein the headphone apparatus further comprises a noise reduction circuit, the noise reduction circuit is electrically connected the port selection module and the headphone receiver , and is configured to execute a noise reduction process for the audio signal before the audio signal is output to the headphone receiver.

8. A head-mounted display system, comprising a head-mounted display device and a control box connected to the head-mounted display device, the head-mounted display device comprising a display apparatus and a headphone apparatus, the headphone apparatus comprising a headphone receiver, the display apparatus comprising a first connection port, the headphone apparatus further comprising a second connection port and a third connection port;
wherein, the display apparatus and the headphone apparatus are connected or disconnected via the first connection port and the second connection port; the headphone apparatus controls to receive an audio signal from the control boxvia the third connection port and output the audio signal via the headphone receiverwhen detecting the headphone apparatus detects the first connection port of the display apparatus is disconnected from the second connection port of the headphone apparatus.

9. The head-mounted display system according to claim 8, wherein when the headphone apparatus detects the first connection port of the display apparatus is connected to the second connection port of the headphone apparatus, the headphone apparatus controls to receive the audio signal from the display apparatus via the second connection port and output the audio signal via the headphone receiver; wherein the display apparatus receives a video signal from the control box and decodes the video signal to a display signal and the audio signal.

10. The head-mounted display system according to claim 9, wherein headphone apparatus further comprises a port selection module, the port selection module is connected between the second connection port, the third connection port, and the headphone receiver, and is configured to detect whether the second connection port is connected to the first connection port of the display apparatus to obtain a detection result, and select one of the second connection port and the third connection port to connect to the headphone receiver according to the detection result.

11. The head-mounted display system according to claim 10, wherein the port selection module comprises a detection unit and a path switch, the second connection port comprises a connection detection pin, the path switch connectsbetween the second connection port, the third connection port, and the headphone receiver; the detection unit is connected to the connection detection pin, and is configured to detect a voltage level of the connection detection pin to judge whether the second connection port is connected to the first connection port of the display apparatus; the detection unit is further configured to control the path switch to establish an electrical connection between the second connection port and the headphone receiver when determining the second connection port is connected to the first connection port of the display apparatus, and control the path switch to establish an electrical connection between the third connection port and the headphone receiver when determining the second connection port is disconnected from the first connection port of the display apparatus.

12. The head-mounted display system according to claims 9, wherein the display apparatus further comprises an audio and video processing module, the audio and video processing module is configured to decode a video signal provided by the control box to the display signal and the audio signal, and output the display signal to the display apparatus to display and output the audio signal to the headphone apparatus via the first connection port.

13. The head-mounted display system according to claim 12, wherein the display apparatus further comprises a displayer and an optical module, the displayer is connected to the audio and video processing module, and is configured to receive the display signal output by the audio and video processing module and generate a corresponding display frame according to the display signal, the optical module is configured to form an enlarged virtual image according to the display frame generated by the displayer and project the enlarged virtual image to eyes of a user.

14. The head-mounted display system according to claim 10, wherein the headphone apparatus further comprises a noise reduction circuit, the noise reduction circuit is electrically connected the port selection module and the headphone receiver , and is configured to execute a noise reduction process for the audio signal before the audio signal is output to the headphone receiver.

15. The head-mounted display system according to claim 10, wherein the control box comprises an audio output port and a video output port, the audio output port is configured to connect to the headphone apparatus, the video output port is configured to connect to the display apparatus, the control box is configured to provide a video signal to the display apparatus via the video output port and provide an audio signal to the headphone apparatus via the audio output port.

16. The head-mounted display system according to claim 10, wherein the control box comprises an integrated port integrated by an audio output port and a video output port, the integrated port is configured to connect to the third connection port of the headphone apparatus, the control box is configured to output a video signal or an audio signal to the third connection port via the integrated port; the display apparatus obtains the video signal of the third connection port via the first connection port, or the headphone apparatus obtains the audio signal via the third connection port and outputs the audio signal to the headphone receiver.

17. The head-mounted display system according to claim 15 or 16, wherein the control box further comprises a control unit, an input unit, a storage unit, and a display unit, the storage unit is configured to store audio and video files, the control unit is configured to play one video file and generate a corresponding video signal in response to an operation of opening the video file, input via the input unit by a user, and output the video signal via the video output port, the control unit is further configured to play one audio file and generate a corresponding audio signal in response to an operation of opening the audio file, input via the input unit by the user, and output the audio signal via the audio output port.

18. The head-mounted display system according to claim 17, wherein the control unit is further configured to control the control box to enter an audio play mode in response to a state that the display apparatus and the headphone apparatus are detached; in the audio play mode, the control unit controls the display unit to only display file sources including audio format.

19. The head-mounted display system according to claim 18, wherein the control box further comprises a communication unit, the communication unit is configured to connect to other devices or network servers by wireless communication, the control unit is further configured to control the display unit to display audio and video files in other devices when the control box is connected to the other devices via the communication unit, and control to play one audio and video file of the other devices or the network servers directly in response to a selection for the audio and video file.

20. The head-mounted display system according to claim 18, wherein the control box further comprises at least one data port configured to connect to other devices, the control unit is further configured to control the display unit to display audio and video files in other devices when the control box is connected to the other devices via the data port, and control to play one audio and video file of the other devices directly in response to a selection for the audio and video file.
